# EUROPÄISCHE PATENTSCHRIFT

(11) **EP 1 588 955 B1**
(45) Veröffentlichungstag und Bekanntmachung des Hinweises auf die Patenterteilung: **17.09.2008**
(21) Anmeldenummer: 05005199.4
(22) Anmeldetag: 10.03.2005
(51) Int. Cl.: B65D 43/16

(54) **Lager- und Transportbehälter**
Storage and transport container
Récipient ou caisse de stockage et de transport

(30) Priorität: 20.04.2004 DE 202004006398 U; 18.01.2005 DE 202005000845 U
(43) Veröffentlichungstag der Anmeldung: 26.10.2005
(73) Patentinhaber: Fritz Schäfer GmbH, 57290 Neunkirchen (DE)
(72) Erfinder: Schäfer, Gerhard, 57290 Neunkirchen (DE)
(74) Vertreter: Grosse, Wolf-Dietrich Rüdiger

(56) Entgegenhaltungen:
- EP-A- 0 104 136
- US-A- 3 850 464
- US-B1- 6 179 156

## Beschreibung

Die Erfindung betrifft einen Lager- und Transportbehälter, umfassend einen aus zwei anscharnierten, nach außen wegschwenkbaren, in der Öffnungslage mit der Behälterwand verrastbaren Deckelhälften bestehenden Deckel, wobei die Deckelhälften mit mindestens einem verschiebbaren Verschlussriegel versehen sind, der oberhalb der Deckelhälfte ein Griffteil aufweist.

Ein Behälter bzw. Kasten mit einem Deckel, der durch einen Verschlussriegel die Behälteröffnung verschließend mit dem Behälterkorpus verriegelbar ist, ist durch die EP 0 104 136 B1 bekannt geworden. Sowohl der wie üblich durch Spritzgießen aus Kunststoff einstückig hergestellte Behälter als auch der Deckel weisen umlaufende, einander deckungsgleich aufliegende Behälterflansche auf. Zwei gegenüberliegende Längsränder der Flansche von Deckel und Behälter sind mit je zwei parallel zum Deckel- bzw. Behälterrand verlaufenden Schlitzen versehen, die in der Schließlage paarweise miteinander fluchten. Um den Deckel in der Schließlage zu halten, sind in den von den Flanschen gebildeten Schlitzpaaren Verschlussriegel eingesteckt. Jeder Verschlussriegel weist ein sich nach unten verjüngendes Steckteil auf, das über einen Hals mit dem Griffteil verbunden ist, wobei der Hals im Schlitz des Deckelflansches auf Gleitplatten bzw. -schienen geführt ist.

Aus der EP 1 428 764 A1 ist ein Stapelbehälter mit zwei nach außen um Scharniere wegschwenkbaren Deckelhälften bekannt. Die geöffneten, aufgeschwenkten Deckelhälften sind mit der ihnen zugewandten Behälterwand verrastbar. Die Deckelhälften sind hierzu mit Nocken versehen, die mit einem an einer Verstärkungswand des Behälters vorgesehenen Einrastteil in Eingriff bringbar sind bzw. dort einschnappen. Die Deckelhälften sind auf diese Weise während eines Transportes des geöffneten Behälters an dessen Wänden fixiert.

Der Erfindung liegt die Aufgabe zugrunde, einen Lager- und Transportbehälter bzw. Kasten der eingangs genannten Art zu schaffen, der eine Fixierung der geöffneten Deckelhälften in einfacher Weise und mit weniger Aufwand ermöglicht.

Diese Aufgabe wird erfindungsgemäß dadurch gelöst, daß die offen geschwenkten Deckelhälften unmittelbar mit dem Griffteil ihrer Verschlussriegel in die jeweilige Behälterwand einrasten. Indem somit dem Behälter bzw. den Deckelhälften immanente Bauteile, nämlich die vorhandenen Verschlussriegel, gleichzeitig auch zur Verrastung mit den Behälterwänden genutzt werden, bedarf es keiner zusätzlichen konstruktiven Maßnahmen an den Deckelhälften.

Eine bevorzugte Ausgestaltung der Erfindung sieht vor, daß den Verschlussriegeln in der Behälterwand zugeordnete Rastaufnahmen mit einem Hinterschnitt ausgebildet sind. Die aufgeschwenkten Deckelhälften brauchen lediglich an die Behälterlängswand gedrückt zu werden, wobei sich die Verschlussriegel beim Eintauchen in die Rastaufnahmen selbsttätig hochschieben bzw. verlagern und sukzessive in den eingebrachten Hinterschnitt eingreifen und verrasten, was sich durch leichtes An- bzw. Gegendrücken der Deckelhälfte einfach erreichen lässt. Zum Verschwenken der Deckelhälften in die Schließlage lässt sich die Verrastung der Griffteile der Verschlussriegel in den Rastaufnahmen ebenso leicht aufheben, weil die Konturgebung der Rastaufnahmen über die Griffteile die Verschiebung der Verschlussriegel bewirken, so daß sich die Griffteile durch eine nach oben gerichtete Bewegung sukzessive aus den Hinterschnitten lösen und in der Folge völlig freikommen.

Wenn an den Deckelhälften angeordnete Handgriffe ebenfalls in die jeweilige Behälterwand einrasten, wobei den Handgriffen dort zugeordnete Rastaufnahmen vorteilhaft als nasenartige, daß vordere Handgriffende übergreifende Vorsprünge ausgebildet sind, lässt sich eine zusätzliche Verrastung bzw. Fixierung erreichen. Auch für diese zusätzliche Verrastung werden somit an den Deckelhälften ohnehin vorhandene Bauteile genutzt.

Es wird in jedem Fall, d.h. sowohl mit der Verschlussriegel-Verrastung als auch bei der Kombination mit der Handgriff-Verrastung eine eng an den Behälterkorpus anliegende Fixierung und Sicherung der Deckelhälften in dieser Lage erreicht. Das wird vorzugsweise noch dadurch begünstigt, daß die Rastaufnahmen erfindungsgemäß zumindest bereichsweise konturparallel zu dem Verschlussriegel bzw. dem Handgriff ausgebildet sind. Die Behälter können daher nahe beieinander aufgestellt bzw. gelagert werden.

Weitere Einzelheiten und Merkmale der Erfindung ergeben sich aus den Ansprüchen und der nachfolgenden Ausführung eines in den Zeichnungen dargestellten Ausführungsbeispiels der Erfindung. Es zeigen:
- Fig. 1: einen Lager- und Transportbehälter von einer Stirnwand her gesehen mit aufgeklappten bzw. weggeschwenkten und in den Behälterlängswänden verrasteten Deckelhälften;
- Fig. 2: als Einzelheit des Behälters nach Fig. 1 die Verrastung der linken Deckelhälfte in der angrenzenden Behälterlängswand;
- Fig. 3: die Einzelheit der Fig. 2 in einer perspektivischen Darstellung;
- Fig. 4: als Einzelheit in einer perspektivischen Vorderansicht die in die Behälterlängswand eingearbeiteten Rastaufnahmen;
- Fig. 5: die Einzelheit der Fig. 4 aus einer etwas anderen Perspektive; und
- Fig. 6: als Einzelheit in einer perspektivischen Darstellung einen an den Deckelhälften ausgebildeten, ergonomischen Handgriff.

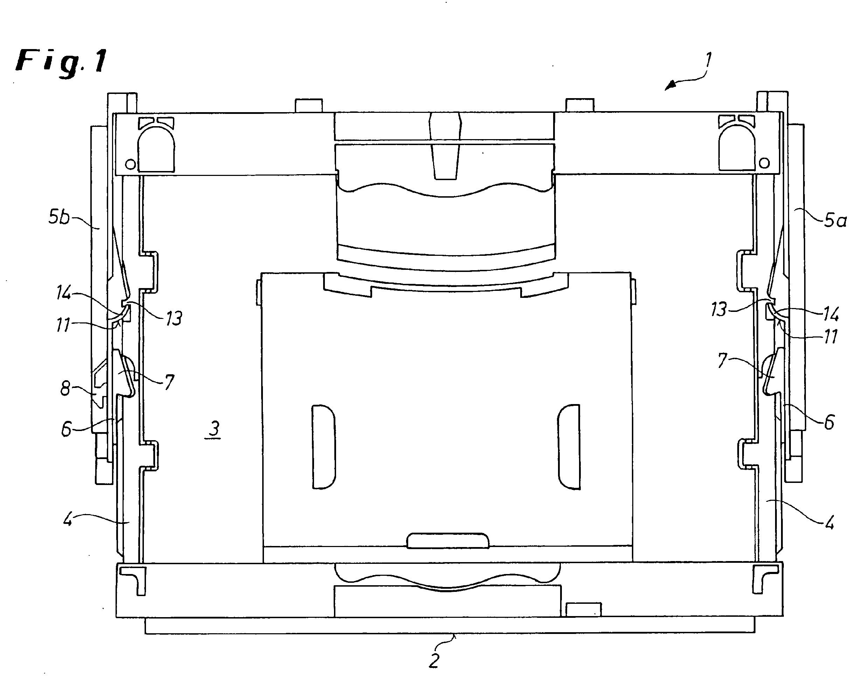

Ein in Fig. 1 gezeigter, rechteckiger Lager- und Transportbehälter 1 besteht aus einem Boden 2, Stirnwänden 3 sowie Längswänden 4 und einem aus zwei Deckelhälften 5a, 5b bestehenden Deckel. Die Deckelhälften 5a, 5b sind verschwenkbar am oberen Behälterrand anscharniert und in ihrer aufgeschwenkten, mit den Behälterlängswänden 4 verrasteten Lage gezeigt. Wenn die Deckel ihre zugeschwenkte, die Behälteröffnung abdeckende Verschließposition einnehmen, wird diese von an den Deckelhälften 5a, 5b vorgesehenen Verschlussriegeln 6 gesichert, von denen jeweils einer an einer Stirnwandseite des Behälters 1 in den Deckelhälften 5a bzw. 5b vorgesehen ist.

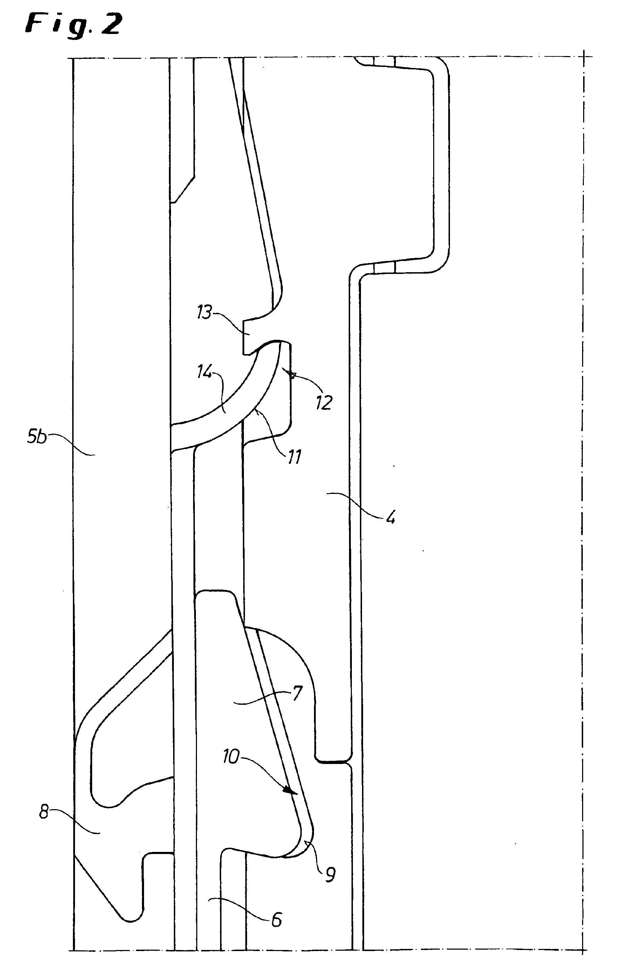

Die Verschlussriegel 6, umfassend ein verschiebbares Gleitplattenelement, weisen an ihrer in der Einbaulage in den Deckelhälften 5a bzw. 5b oberen Seite ein mit einem Finger einer Hand zu betätigendes Griffteil 7 und an ihren Unterseiten einen Einhakvorsprung 8 (vgl. Fig. 2 und die linke Bildhälfte von Fig. 1) auf. Die Einhakvorsprünge 8 der Verschlussriegel 7 greifen in Öffnungen des Behälteroberrandes ein.

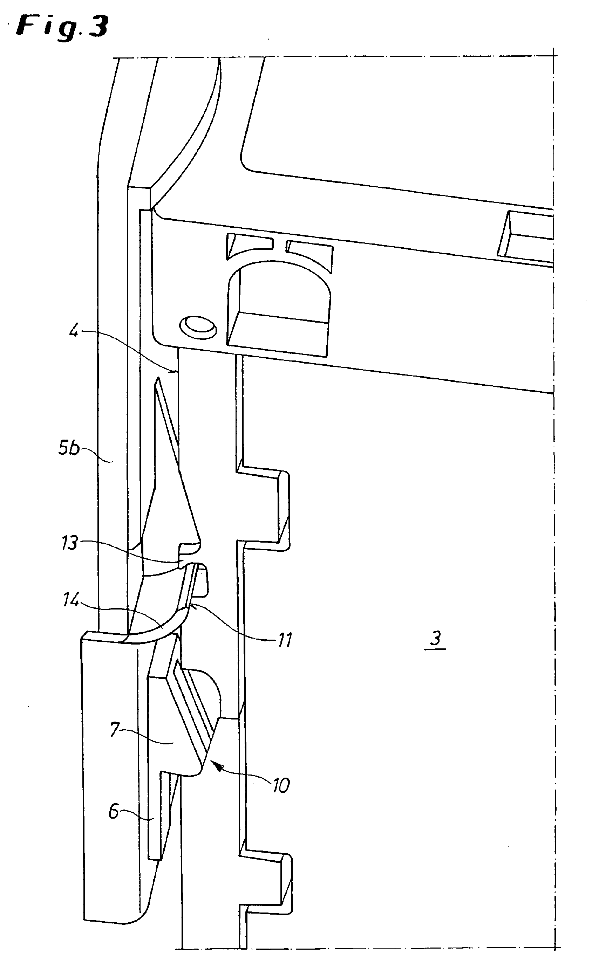

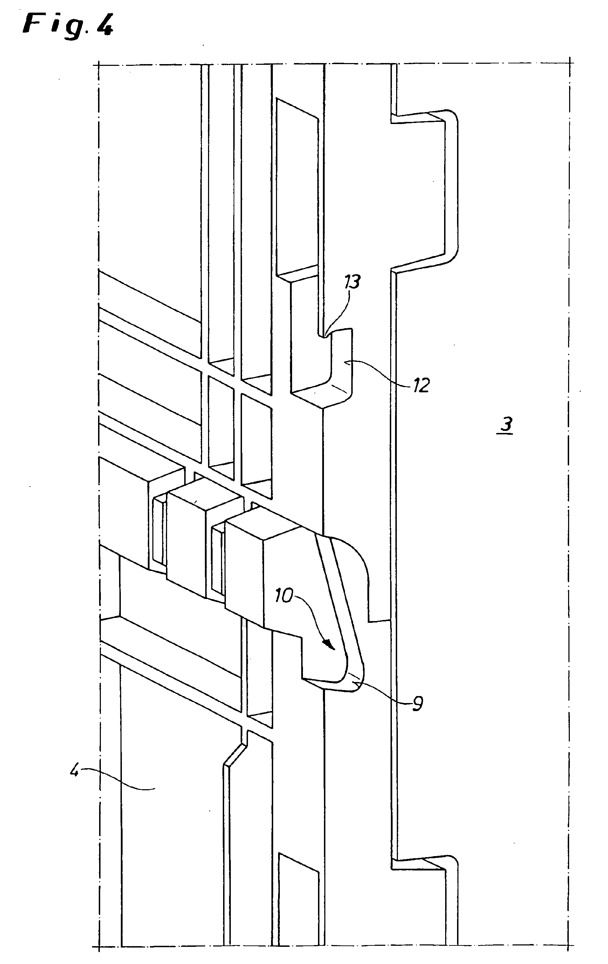

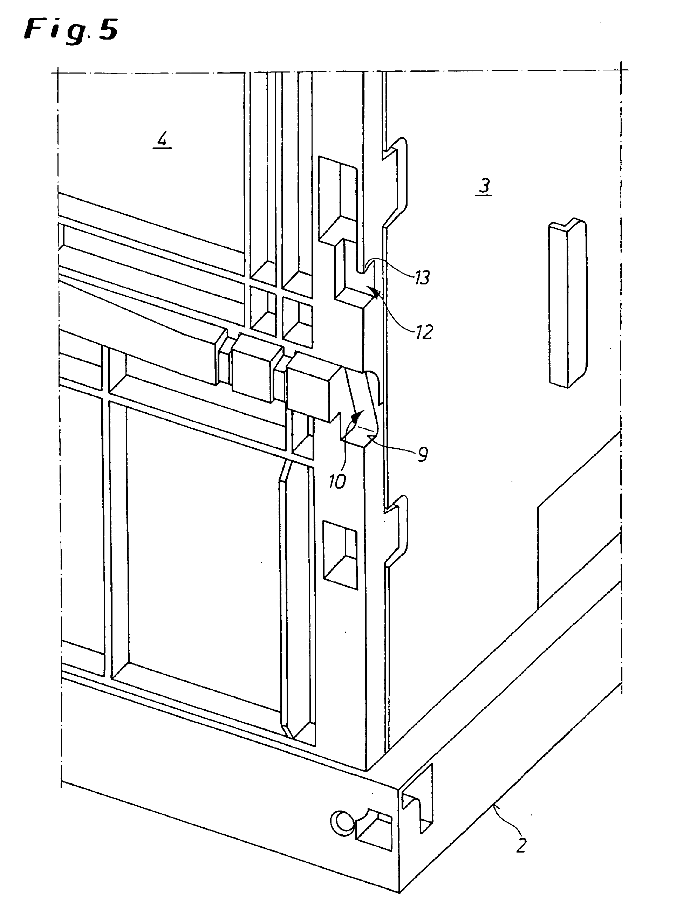

Wie den Fig. 1 sowie 2 und 3 zu entnehmen ist, dienen die Verschlussriegel 6 in der aufgeschwenkten Lage der Deckelhälften 5a bzw. 5b gleichzeitig zu deren eng anliegenden Verrastung mit den Behälterlängswänden 4. Die Längswände 4 sind dazu in ihren Seitenbereichen mit zu den Griffteilen 7 der Verschlussriegel 6 weitestgehend konturparallelen und zudem mit einem Hinterschnitt 9 ausgebildeten Rastaufnahmen 10 versehen (vgl. die Fig. 4 und 5). Die Rastaufnahmen 10 sind ausgehend von ihrem Hinterschnitt 9 nach vorne bzw. außen hin ansteigend ausgebildet. Beim Andrücken der Deckelhälften 5a bzw. 5b an die jeweilige Behälterlängswand 4 wird der Verschlussriegel 6 durch die dem Hinterschnitt 9 vorgelagerte Konturgebung selbsttätig zunächst angehoben, bis er danach wiederum selbsttätig in die Endposition des Hinterschnitts 9 abgleitet und danach die Rastposition einnimmt.

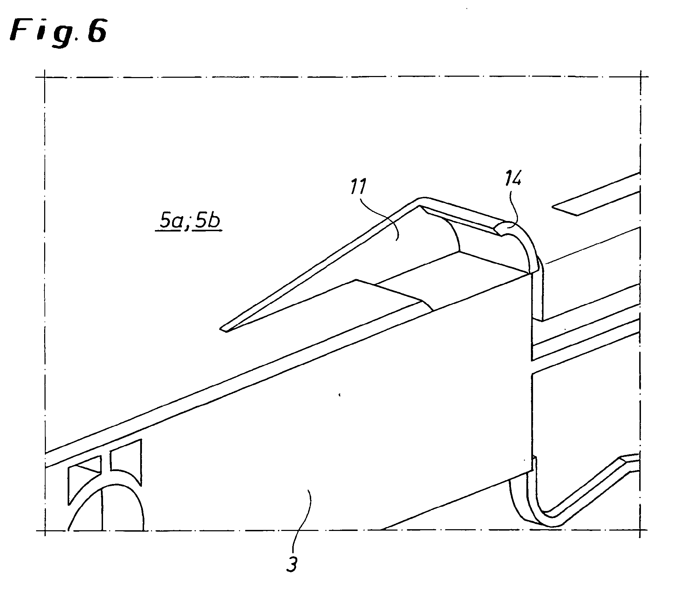

Die Deckelhälften 5a bzw. 5b sind im Ausführungsbeispiel außer mit den Verschlussriegeln 6 weiterhin auch mit ergonomisch geformten, in Fig. 6 als Einzelheit gezeigten Handgriffen 11 zum Ergreifen und Verschwenken der Deckelhälften 5a, 5b in ihre jeweilige Gebrauchslage versehen. Die Handgriffe 11 lassen sich zur ergänzenden Rastsicherung der aufgeschwenkten Deckelhälften 5a bzw. 5b in den Behälterlängswänden 4 nutzen. Dort sind deshalb den Handgriffen 11 ebenfalls Rastaufnahmen 12 zugeordnet, die an ihrem oberen, dem Oberrand des Behälters 1 zugewandten Ende einen nasenartigen Vorsprung 13 besitzen (vgl. die Fig. 4 und 5), der konturparallel zu einer leicht gerundeten Kopfplatte 14 (vgl. Fig. 6) des Handgriffs 11 ist und die Kopfplatte 14 in der Rastposition etwas übergreift.

Zur Fixierung der aufgeschwenkten Deckelhälften 5a bzw. 5b mit bzw. an den Behälterlängswänden 4 dienen somit in jedem Fall nur an den Deckelhälften ohnehin vorhandene Bauteile. Hierbei wird insbesondere die verschiebliche Anordnung der Verschlussriegel auch zum selbsttätigen Ver- und Entrasten genutzt, was noch durch die aufeinander angepasste Formgebung der ineinander greifenden Rastelemente begünstigt und unterstützt wird. Eine enge, sichere Anlage der Deckelhälften an den Behälterlängswänden wird gewährleistet.

## Patentansprüche

1. Lager- und Transportbehälter (1), umfassend einen aus zwei anscharnierten, nach außen wegschwenkbaren, in der Öffnungslage mit der Behälterwand (4) verrastbaren Deckelhälften (5a, 5b) bestehenden Deckel, wobei die Deckelhälften (5a, 5b) mit mindestens einem versschiebbaren Verschlussriegel (6) versehen sind, der oberhalb der Deckelhälfte (5a, 5b) ein Griffteil (7) aufweist,
**dadurch gekennzeichnet,**
**daß** die offen geschwenkten Deckelhälften (5a, 5b) unmittelbar mit dem Griffteil (7) ihrer Verschlussriegel (6) in die jeweilige Behälterwand (4) einrasten.

2. Lager- und Transportbehälter nach Anspruch 1,
**dadurch gekennzeichnet,**
**daß** den Griffteilen (7) der Verschlußriegel (6) in der Behälterwand (4) zugeordnete Rastaufnahmen (10) mit einem Hinterschnitt (9) ausgebildet sind.

3. Lager- und Transportbehälter nach Anspruch 1 oder 2,
**dadurch gekennzeichnet,**
**daß** an den Deckelhälften (5a, 5b) angeordnete Handgriffe (11) in die jeweilige Behälterwand (4) einrasten.

4. Lager- und Transportbehälter nach Anspruch 3,
**dadurch gekennzeichnet,**
**daß** den Handgriffen (11) in der Behälterwand (4) zugeordnete Rastaufnahmen (12) als nasenartige, das vordere Handgriffende übergreifende Vorsprünge (13) ausgebildet sind.

5. Lager- und Transportbehälter nach einem der Ansprüche 1 bis 4,
**dadurch gekennzeichnet,**
**daß** die Rastaufnahmen (10; 12) zumindest bereichsweise konturparallel zu dem Griffteil (7) des Verschlussriegels (6) bzw. dem Handgriff (11) ausgebildet sind.

## Claims

1. Storage and transport container (1), comprising a lid consisting of two hinged lid halves (5a, 5b) which can be pivoted outwards and locked to the container wall (4) in the opening position, wherein the lid halves (5a, 5b) are provided with at least one displaceable closure bar (6) which has a grip part (7) above the lid half (5a, 5b),
**characterised**
**in that** the lid halves (5a, 5b) which have been pivoted open lock directly into the respective container wall (4) with the grip part (7) of their closure bar (6).

2. Storage and transport container according to Claim 1,
**characterised**
**in that** the locking recesses (10) associated with the grip parts (7) of the closure bar (6) in the container wall (4) are configured with an undercut (9).

3. Storage and transport container according to Claim 1 or 2,
**characterised**
**in that** handles (11) which are arranged on the lid halves (5a, 5b) lock into the respective container wall (4).

4. Storage and transport container according to Claim 3,
**characterised**
**in that** the locking recesses (12) associated with the handles (11) in the container wall (4) are configured as nose-like projections (13) which grasp the front end of the handle.

5. Storage and transport container according to one of Claims 1 to 4,
**characterised**
**in that** the locking recesses (10; 12) are configured to be at least in some areas parallel in contour to the grip part (7) of the closure bar (6) or to the handle (11).

## Revendications

1. Conteneur de stockage et de transport (1), comprenant un couvercle constitué de deux moitiés de couvercle (5a, 5b) reliées par une charnière, pouvant être pivotées vers l'extérieur et enclenchées dans la paroi de conteneur (4) dans la position d'ouverture, les moitiés de paroi (5a, 5b) étant équipées d'au moins un verrou coulissant (6) comportant une pièce de préhension (7) située au-dessus des moitiés de couvercle (5a, 5b),
**caractérisé en ce que**
les moitiés de couvercle (5a, 5b) pivotées en position ouverte s'enclenchent directement avec la pièce de préhension (7) de leur verrou (6) dans chacune des parois de conteneur (4).

2. Conteneur de stockage et de transport selon la revendication 1,
**caractérisé en ce que**
des admissions d'enclenchement (10) avec une contre-dépouille (9) sont attribuées aux pièces de préhension (7) du verrou (6) dans la paroi de conteneur (4).

3. Conteneur de stockage et de transport selon la revendication 1 ou 2,
**caractérisé en ce que**
des poignées (11) disposées sur les moitiés de couvercle (5a, 5b) s'enclenchent dans chacune des parois de conteneur (4).

4. Conteneur de stockage et de transport selon la revendication 3,
**caractérisé en ce que**
des admissions d'enclenchement (12) attribuées aux poignées (11) dans la paroi de conteneur (4) sont conçues comme des saillies (13) en forme de nez, passant par-dessus l'extrémité avant des poignées.

5. Conteneur de stockage et de transport selon l'une des revendications 1 à 4,
**caractérisé en ce que**
les admissions d'enclenchement (10 ; 12) sont au moins par sections conçues avec un contour parallèle à la pièce de préhension (7) du verrou (6) ou de la poignée (11).
